# EUROPEAN PATENT APPLICATION

(11) **EP 4 642 134 A1**
(43) Date of publication of application: **29.10.2025**
(21) Application number: 22968891.6
(22) Date of filing: 21.12.2022
(51) Int. Cl.: H04W 72/232

(54) **TRANSMISSION CONFIGURATION INDICATOR STATE DETERMINATION METHOD AND APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2022/140676
(87) International publication number: WO 2024/130590

(57) **Abstract**

Provided in the present disclosure are a transmission configuration indicator determination method and apparatus, and a storage medium. The transmission configuration indicator state determination method comprises: receiving configuration information, the configuration information being used for determining a component carrier list, the component carrier list corresponding to at least one serving cell, and the at least one serving cell comprising a first serving cell performing transmission on the basis of a single transmission and reception point, and/or a second serving cell performing transmission on the basis of multi transmission and reception points; and receiving transmission configuration indicator (TCI) state activation indication information, wherein the TCI state activation indication information is used for activating a TCI state of the first serving cell and/or the second serving cell. The method provided by the present disclosure can enable terminals to reach a consensus with respect to the cognition of unified TCI state identifiers while reducing signaling overhead, thus improving the transmission capability based on unified TCI states.

## Description

### TECHNICAL FIELD

The disclosure relates to the field of communication technology, and in particular to a method, an apparatus and a storage medium for determining a transmission configuration indicator (TCI) state.

### BACKGROUND

In New Radio (NR) technology, for example, when the communication frequency band is in frequency range 2, due to the rapid attenuation of high-frequency channels, beam based transmission and reception are required to ensure coverage.

In the related art, the beams of the control channel, data channel, and reference signal are all independently indicated. Moreover, the control channels (Physical Downlink Control Channel (PDCCH) and Physical Uplink Control Channel (PDCCH)) and/or their corresponding demodulation reference signals (DMRSs) use Medium Access Control (MAC) control elements (CE) to activate a beam. The data channels (Physical Downlink Shared Channel (PDSCH) and Physical Uplink Shared Channel (PUSCH)) and/or their corresponding DMRSs use downlink control information (DCI) signaling to indicate their respective beams.

In order to reduce MAC CE signaling overhead, for a terminal with multiple serving cells, the multiple serving cells can be configured as at least one Component Carrier (CC) list. For multiple serving cells belonging to one CC list, one MAC CE can be used to activate or update the corresponding TCI state. However, the serving cell can be configured for transmission based on Single Transmission Reception Point (S-TRP) or Multi Transmission Reception Point (M-TRP).

It is currently unclear how to configure the CC list for serving cells configured for S-TRP transmission and M-TRP transmission. For example, whether serving cells configured for S-TRP transmission and M-TRP transmission can be configured in the same CC list is a problem that needs to be solved.

### SUMMARY

In order to overcome the problems existing in the related art, the present disclosure provides a method, an apparatus and a storage medium for determining a TCI state.

According to a first aspect of embodiments of the present disclosure, a method for determining a TCI state is provided, including:
receiving configuration information, wherein the configuration information is used to determine a component carrier list, and the component carrier list corresponds to at least one serving cell;
the at least one serving cell includes a first serving cell based on single transmission and reception point transmission, and/or a second serving cell based on multi transmission and reception point transmission;
receiving TCI state activation indication information, wherein the TCI state activation indication information is used to activate a TCI state of the first serving cell and/or the second serving cell.

According to a second aspect of embodiments of the present disclosure, a method for determining a TCI state is provided, including:
sending configuration information, wherein the configuration information is used to determine a component carrier list, and the component carrier list corresponds to at least one serving cell;
the at least one serving cell includes a first serving cell based on single transmission and reception point transmission, and/or a second serving cell based on multi transmission and reception point transmission;
sending TCI state activation indication information, wherein the TCI state activation indication information is used to activate a TCI state of the first serving cell and/or the second serving cell.

According to a third aspect of embodiments of the present disclosure, an apparatus for determining a TCI state is provided, including:
a receiving unit, configured to receive configuration information, wherein the configuration information is used to determine a component carrier list, and the component carrier list corresponds to at least one serving cell;
the at least one serving cell includes a first serving cell based on single transmission and reception point transmission, and/or a second serving cell based on multi transmission and reception point transmission;
the receiving unit is further configured to receive TCI state activation indication information, wherein the TCI state activation indication information is used to activate a TCI state of the first serving cell and/or the second serving cell.

According to a fourth aspect of embodiments of the present disclosure, an apparatus for determining a TCI state is provided, including:
a sending unit, configured to send configuration information, wherein the configuration information is used to determine a component carrier list, and the component carrier list corresponds to at least one serving cell;
the at least one serving cell includes a first serving cell based on single transmission and reception point transmission, and/or a second serving cell based on multi transmission and reception point transmission;
the sending unit is further configured to send TCI state activation indication information, wherein the TCI state activation indication information is used to activate a TCI state of the first serving cell and/or the second serving cell.

According to a fifth aspect of embodiments of the present disclosure, an apparatus for determining a TCI state is provided, including:
a processor; and
a memory, configured to store instructions executable by the processor,
wherein the processor is configured to execute the method described in the first aspect, any one of implementations of the first aspect, the second aspect, or any one of implementations of the second aspect.

According to a sixth aspect of embodiments of the present disclosure, a storage medium is provided. The storage medium stores instructions, which, when executed by a processor of a terminal, enable the terminal to perform the method described in the first aspect, any one of implementations of the first aspect, the second aspect, or any one of implementations of the second aspect.

The technical solution provided by embodiments of the present disclosure may include the following beneficial effects: proposing a method for activating a TCI state of serving cells based on S-TRP transmission and serving cells based on M-TRP transmission configured in one CC list, which can reduce signaling overhead and enable terminals to reach consensus on the recognition of unified TCI state identification, thereby improving the transmission capability based on unified TCI state.

It should be understood that the above general description and the subsequent detailed description are only exemplary and explanatory, and cannot limit this disclosure.

### BRIEF DESCRIPTION OF THE DRAWINGS

The accompanying drawings are incorporated into the specification and form a part of the specification, illustrating embodiments in accordance with the present disclosure and used together with the specification to explain the principles of the present disclosure.
Fig. 1 is a schematic diagram of a wireless communication system illustrated according to an exemplary embodiment.
Fig. 2 is a schematic flowchart of a method for determining a TCI state illustrated according to an exemplary embodiment.
Fig. 3 is a schematic flowchart of a method for determining a unified TCI state of a first serving cell illustrated according to an exemplary embodiment.
Fig. 4 is a schematic flowchart of a method for determining a unified TCI state of a first serving cell according to a first default rule illustrated according to an exemplary embodiment.
Fig. 5 is a schematic flowchart of a method for determining a unified TCI state of a first serving cell through first indication information illustrated according to an exemplary embodiment.
Fig. 6 is a schematic flowchart of a method for determining a unified TCI state of a first serving cell illustrated according to an exemplary embodiment.
Fig. 7 is a schematic flowchart of a method for determining a unified TCI state of a first serving cell according to a second default rule illustrated according to an exemplary embodiment.
Fig. 8 is a schematic flowchart of a method for determining a unified TCI state of a first serving cell through second indication information illustrated according to an exemplary embodiment.
Fig. 9 is a schematic flowchart of a method for determining a TCI state illustrated according to an exemplary embodiment.
Fig. 10 is a block diagram of an apparatus for determining a TCI state illustrated according to an exemplary embodiment.
Fig. 11 is a block diagram of an apparatus for determining a TCI state illustrated according to an exemplary embodiment.
Fig. 12 is a block diagram of an apparatus illustrated according to an exemplary embodiment.
Fig. 13 is a block diagram of an apparatus illustrated according to an exemplary embodiment.

### DETAILED DESCRIPTION

Reference will now be made in detail to the exemplary embodiments, examples of which are illustrated in the accompanying figures. When the following description refers to the accompanying figures, the same numerals in different figures refer to the same or similar elements, unless otherwise indicated. The implementations described in the following exemplary embodiments do not represent all implementations consistent with the embodiments of the disclosure. Rather, they are merely examples of devices and methods consistent with some aspects of the disclosure as recited in the appended claims.

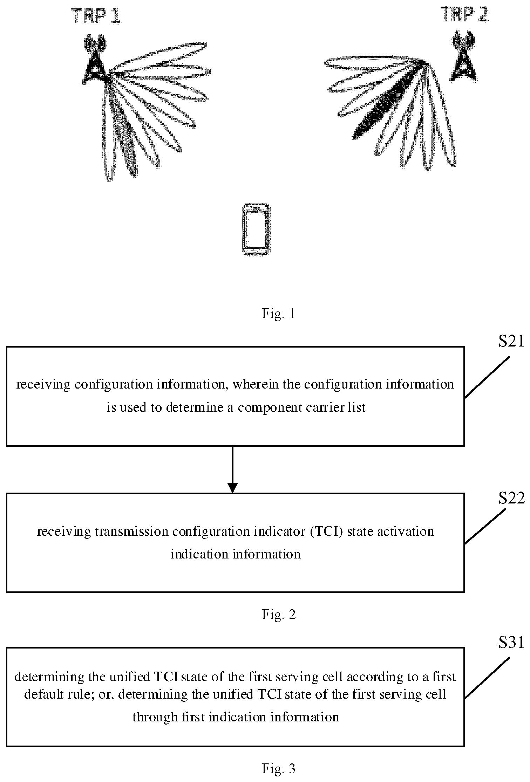

The method for determining a TCI state of embodiments of the present disclosure can be applied to the wireless communication system shown in Fig. 1. As shown in Fig. 1, the wireless communication system includes network devices and terminals. The terminal is connected to the network device through radio resources and performs data transmission.

It can be understood that the wireless communication system shown in Fig. 1 is only for illustrative purposes. The wireless communication system may also include other network devices, such as core network devices, wireless relay devices, and wireless backhaul devices, which are not shown in Fig. 1. The number of network devices and terminals included in the wireless communication system is not limited in the embodiments of the present disclosure.

It can be further understood that the wireless communication system in embodiments of the present disclosure is a network that provides wireless communication functionality. The wireless communication system can adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency Division Multiple Access (OFDMA), Single Carrier Frequency Division Multiple Access (SC-FDMA), and Carrier Sense Multiple Access with Collision Avoidance. According to factors such as capacity, speed, and latency of different networks, they can be divided into 2G (generation) networks, 3G networks, 4G networks, or future evolution networks, such as 5G networks, which can also be referred to as New Radio (NR) networks. For ease of description, wireless communication networks are sometimes referred to as networks in this disclosure.

Further, the network devices referred to in this disclosure may also be referred to as wireless access network devices. The wireless access network device may be a base station, an evolved node B (BS), a home base station, an access point (AP) in a wireless fidelity (WIFI) system, a wireless relay node, a wireless backhaul node, a transmission point (TP) or a transmission and reception point (TRP), etc. It may also be a gNB in an NR system, or a component or part of the equipment that makes up the base station. It should be understood that the specific technology and device form adopted by the network device in embodiments of the present disclosure are not limited. In this disclosure, network devices can provide communication coverage for specific geographic areas and can communicate with terminals located within that coverage area (cell). In addition, when it comes to V2X communication systems, the network devices can also be vehicle mounted devices.

Further, the terminal referred to in this disclosure, also known as terminal device, user equipment (UE), mobile station (MS), mobile terminal (MT), etc., is a device that provides voice and/or data connectivity to users. For example, the terminal may be a handheld device with wireless connectivity, a vehicle mounted device, etc. At present, some examples of terminals include: mobile phones, customer premise equipment (CPE), pocket computers (PPC), handheld computers, personal digital assistants (PDA), laptops, tablets, wearable devices, or vehicle mounted devices. In addition, when it is a V2X communication system, the terminal device may also be a vehicle mounted device. It should be understood that the specific technology and device form adopted by the terminal are note limited in the embodiments of the present disclosure.

In the related art, in order to reduce signaling overhead, the use of unified transmission configuration indicator state (unified TCI state) has been introduced. The unified TCI state may include an uplink and downlink joint TCI state for uplink and downlink joint indication. Alternatively, the unified TCI state may include a separate DL TCI state and a separate UL TCI state to indicate the quasi co-location (QCL) parameters for the uplink and downlink, respectively.

If the network device indicates a separate DL TCI state, then the separate DL TCI state may be applicable to the PDSCH and/or its corresponding DMRS, at least a portion of the PDCCH and/or its corresponding DMRS, and at least a portion of Channel State Information Reference Signals (CSI-RSs) of the terminal. If the network device indicates a separate UL TCI state, then the separate UL TCI state can be applied to the PUSCH and/or its corresponding DMRS, and the PUCCH and/or its corresponding DMRS, as well as at least a portion of sounding reference signals (SRSs) of the terminal. If the network device indicates an uplink and downlink joint TCI state, then the uplink and downlink joint TCI state can be applied to both the uplink and downlink channels and/or reference signals.

In the related art, radio resource control (RRC) signaling and MAC CE can be used to indicate the unified TCI state, or radio resource control (RRC) signaling, media access control control element (MAC CE) signaling, and downlink control information (DCI) signaling can be used to indicate the unified TCI state. RRC is used to indicate the TCI state list. Since TCI is a message dynamically sent in DCI, when the activated unified TCI state corresponds to one codepoint in the TCI field of DCI, there is no need for additional DCI to indicate the TCI state. In this case, RRC and MAC CE can be used to indicate the unified TCI state. On the other hand, when the activated unified TCI state contains unified TCI states corresponding to multiple codepoints in the TCI field of DCI, it is necessary to use the TCI field of DCI to indicate one codepoint to inform to use the unified TCI state corresponding to which codepoint. In this case, RRC, MAC CE, and DCI can be used to indicate the unified TCI state.

The unified TCI state may include an UL and DL joint TCI state, a separate UL TCI state, and/or a separate DL TCI state. If the unified TCI state is configured as an UL and DL joint TCI state, then the unified TCI state contains the UL and DL joint TCI state. Otherwise, the unified TCI state contains at least one of the separate UL TCI state and the separate DL TCI state.

As mentioned earlier, in order to reduce the signaling overhead of MAC CE, for the terminal with multiple serving cells, the multiple serving cells can be configured as at least one Component Carrier (CC) list. Therefore, for multiple serving cells belonging to one CC list, one MAC CE can be used to activate or update the corresponding TCI state. It is currently unclear how to configure the CC list for serving cells configured for S-TRP transmission and serving cells configured for M-TRP transmission, for example, can serving cells configured for S-TRP transmission and serving cells configured for M-TRP transmission be configured in one CC list? Furthermore, if the serving cells configured for S-TRP transmission and the serving cells configured for M-TRP transmission are configured in one CC list, how to activate or update the TCI state of each serving cell is a problem that needs to be solved.

In view of this, embodiments of the present disclosure provide a method for determining the TCI state, mainly for activating the corresponding TCI states of serving cells based on S-TRP transmission and serving cells based on M-TRP transmission configured in a CC list. This method reduces signaling overhead while enabling terminals to reach consensus on the recognition of the unified TCI state identification, thereby improving the transmission capability based on the unified TCI state.

For the convenience of description in embodiments of the present disclosure, the serving cell based on S-TRP transmission is referred to as a first serving cell, and the serving cell based on M-TRP transmission is referred to as a second serving cell.

Fig. 2 is a schematic flowchart of a method for determining a TCI state illustrated according to an exemplary embodiment. As shown in Fig. 2, the method is applied in a terminal, and includes the following steps.

In step S21, configuration information is received, wherein the configuration information is used to determine a CC list.

The CC list is corresponding to at least one serving cell, and the at least one serving cell includes a first serving cell based on S-TRP transmission and a second serving cell based on M-TRP transmission.

In step S22, TCI state activation indication information is received.

The TCI state activation indication information is used to activate a TCI state of the first serving cell and/or the second serving cell.

In an embodiment of the present disclosure, the terminal receives configuration information, which may include information for determining the CC list, as well as other information. The CC list includes at least one serving cell of the first serving cell based on S-TRP transmission and/or the second serving cell based on M-TRP transmission.

In an embodiment of the present disclosure, the TCI state activation indication information may be one activation indication information used to simultaneously activate one or more serving cells in the CC list, or multiple different activation indication information used to activate different serving cells in the CC list.

In an implementation, the TCI state activation indication information may be a MAC CE signaling.

By adopting the technical solution of embodiments of the present disclosure, the method for activating the TCI state of serving cells based on S-TRP transmission and serving cells based on M-TRP transmission configured in a CC list is determined. This not only reduces signaling overhead but also enables terminals to reach consensus on the identification of unified TCI state, thereby improving the transmission capability based on unified TCI state.

In an embodiment of the present disclosure, the serving cells corresponding to the same CC list may include one or more first serving cells based on S-TRP transmission, or may also include one or more second serving cells based on M-TRP transmission.

Further, the second serving cell based on M-TRP transmission may include a second serving cell based on single downlink control information indication (S-DCI M-TRP), and/or a second serving cell based on multi downlink control information indication (M-DCI M-TRP).

The S-DCI M-TRP may be determined in the following way.

When PDCCH, PDSCH, PUCCH, PUSCH and their corresponding DMRSs are configured for transmission based on multiple TCI states, the corresponding serving cell can be determined to be based on S-DCI M-TRP.

When at least one of the following conditions A, B, and C is met, it can be determined that the PDCCH/PDSCH/PUCCH/PUSCH and their respective DMRSs are configured for transmission based on multiple TCI states:
A: Single Frequency Network (SFN) transmission method, which based on the same time-domain resources, frequency-domain resources, and DMRS resources, uses multiple TCI states for transmission,
B: Repeated transmission, including Frequency Division Multiplexing (FDM) methods, where the same time-domain resources, different frequency-domain resources, and different TCI states are used for transmission. Alternatively, it may include Time Division Multiplexing (TDM) methods, where the same frequency-domain resources, different time-domain resources, and different TCI states are used for transmission.
C: Transmission based on multiple DMRS port groups, using the same time-domain and frequency-domain resources, different DMRS port groups, and different TCI states for transmission.

The M-DCI M-TRP can be determined in the following way.

When CORESETPoolIndex of at least one CORESET is configured as 1 and CORESETPoolIndex of at least another CORESET is configured as 0 or not configured to any value in multiple CORSETs of the terminal, it can be determined that the serving cell corresponding to the terminal is the second serving cell M-DCI M-TRP indicated based on multi downlink control information.

It can be understood that when the serving cell does not meet the criteria for S-DCI M-TRP and M-DCI M-TRP, it is the first serving cell based on S-TRP transmission.

In an embodiment of the present disclosure, at least one serving cell corresponding to the same CC list may include at least one first serving cell and at least one second serving cell. Furthermore, the second serving cell may be the second serving cell of S-DCI M-TRP. In this case, the TCI state activation indication information received by the terminal can be used to activate the unified TCI states corresponding to one or more codepoints, and at least one codepoint in the one or more codepoints corresponds to multiple activated unified TCI states. In this case, the activation indication information of the TCI state can be based on the TCI state activation indication information of the S-DCI M-TRP serving cell, that is, the TCI state of the S-DCI M-TRP serving cell can be directly activated based on the received TCI state activation indication information, where one codepoint can correspond to multiple unified TCI states. It can be understood that each unified TCI state corresponds to one TRP. However, at this point, further agreement is needed on which activated unified TCI state the first serving cell S-TRP should use from that codepoint.

Fig. 3 is a schematic flowchart of a method for determining a unified TCI state of a first serving cell illustrated according to an exemplary embodiment. As shown in Fig. 3, the method includes the following steps.

In step S31, the unified TCI state of the first serving cell is determined according to a first default rule, or the unified TCI state of the first serving cell is determined through first indication information.

In an embodiment of the present disclosure, when at least one first serving cell and at least one second serving cell are included in the same CC list, and the second serving cell is an S-DCI M-TRP serving cell, and the TCI state activation indication information received by the terminal activates unified TCI states corresponding to one or more codepoints, and there is at least one codepoint corresponding to multiple activated unified TCI states in the one or more codepoints, the unified TCI state of the first serving cell can be determined according to the first default rule or through the first indication information.

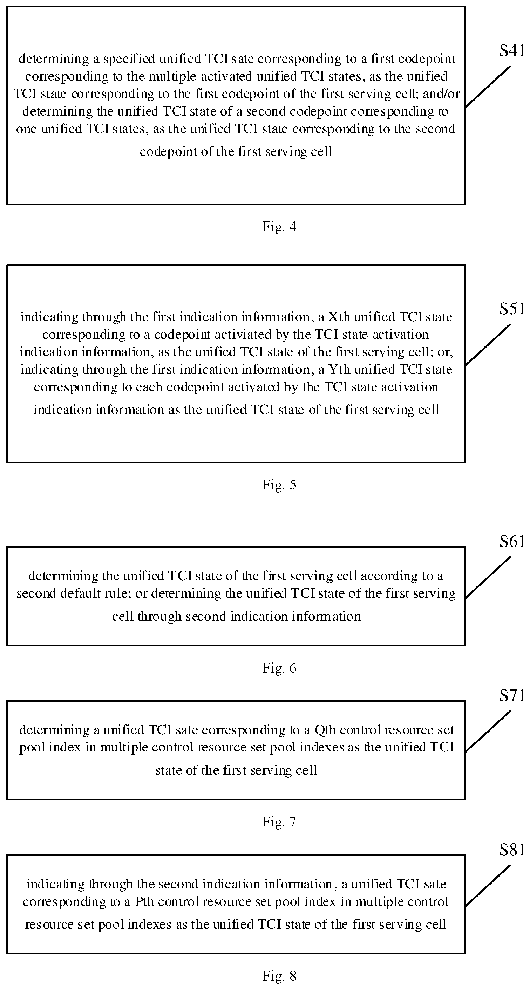

Fig. 4 is a schematic flowchart of a method for determining a unified TCI state of a first serving cell according to a first default rule illustrated according to an exemplary embodiment. As shown in Fig. 4, the method includes the following steps.

In step S41, a specified unified TCI state corresponding to a first codepoint corresponding to the multiple unified TCI states is determined as the unified TCI state corresponding to the first codepoint of the first serving cell; and/or the unified TCI state of a second codepoint corresponding to one unified TCI state is determined as the unified TCI state corresponding to the second codepoint of the first serving cell.

In an example, if the first codepoint codepoint#0 activated by the TCI state activation indication information corresponds to two unified TCI states, namely unified TCI state#1 and unified TCI state#2, where unified TCI state#1 is located at the bit position of the first unified TCI state corresponding to codepoint#0, and unified TCI state#2 is located at the bit position of the second unified TCI state corresponding to codepoint#0. Then, the first default rule may be to use the first unified TCI state corresponding to codepoint#0, i.e. unified TCI state#1, or use the second unified TCI state corresponding to codepoint#0, i.e. unified TCI state#2, as the unified TCI state corresponding to the first codepoint of the first serving cell.

In another example, if the second codepoint codepoint#1 activated by the TCI state activation indication information corresponds to one unified TCI state unified TCI state#3, then this unified TCI state#3 is directly used as the unified TCI state corresponding to the second codepoint of the first serving cell.

Fig. 5 is a schematic flowchart of a method for determining a unified TCI state of a first serving cell through first indication information illustrated according to an exemplary embodiment. As shown in Fig. 5, the method includes the following steps.

In step S51, it is indicated through the first indication information to use a Xth unified TCI state corresponding to a codepoint activated by the TCI state activation indication information as the unified TCI state of the first serving cell; or it is indicated through the first indication information to respectively use a Yth unified TCI state corresponding to each codepoint activated by the TCI status activation indication information as the unified TCI states of the first serving cell.

X and Y are positive integers. For different codepoints, the value of Y may be the same or different.

In an example, it may be indicated by the first indication information that for all codepoints activated by TCI state activation indication information, the Xth unified TCI state of the codepoint can be used as the unified TCI state corresponding to that codepoint of the first serving cell. If the first codepoint codepoint#0 activated by the TCI state activation indication information corresponds to two unified TCI states, namely unified TCI state#01 and unified TCI state#02, where unified TCI state#01 is located at the bit position of the first unified TCI state corresponding to this codepoint#0, and unified TCI state#02 is located at the bit position of the second unified TCI state corresponding to this codepoint#0, the first codepoint codepoint#1 activated by the TCI state activation indication information corresponds to two unified TCI states, namely unified TCI state#11 and unified TCI state#12, where unified TCI state#11 is located at the bit position of the first unified TCI state corresponding to this codepoint#1, and unified TCI state#12 is located at the bit position of the second unified TCI state corresponding to this codepoint#1, and the first codepoint codepoint#2 activated by the TCI state activation indication information corresponds to two unified TCI states, namely unified TCI state#21 and unified TCI state#22, where unified TCI state#21 is located at the bit position of the first unified TCI state corresponding to this codepoint#2, and unified TCI state#22 is located at the bit position of the second unified TCI state corresponding to this codepoint#2, then the first indication information may indicate that for all codepoints activated by the TCI state activation indication information, the Xth unified TCI state of the codepoint is used as the unified TCI state corresponding to that codepoint of the first serving cell. For example, X=1, then the codepoint#0, codepoint#1, codepoint#2... of the first serving cell correspond to the first unified TCI state of that codepoint, that is, codepoint#0 corresponds to unified TCI state#01, codepoint#1 corresponds to unified TCI state#11, codepoint#2 corresponds to unified TCI state#21. For example, X=2, then the codepoint# 0, codepoint#1, codepoint#2... of the first serving cell correspond to the second unified TCI state of that codepoint, that is, codepoint#0 corresponds to unified TCI state#02, codepoint#1 corresponds to unified TCI state#12, codepoint#2 corresponds to unified TCI state#22.

In another example, each codepoint activated by the TCI state activation indication information can be indicated by the first indication information to use the Yth unified TCI state in each codepoint as the unified TCI state corresponding to the codepoint of the first serving cell, where X and Y are positive integers, and the value of Y can be the same or different for different codepoints. If the first codepoint codepoint#0 activated by the TCI state activation indication information corresponds to two unified TCI states, namely unified TCI state#01 and unified TCI state#02, where unified TCI state#01 is located at the bit position of the first unified TCI state corresponding to this codepoint#0, and unified TCI state#02 is located at the bit position of the second unified TCI state corresponding to this codepoint#0, the first codepoint codepoint#1 activated by the TCI state activation indication information corresponds to two unified TCI states, namely unified TCI state#11 and unified TCI state#12, where unified TCI state#11 is located at the bit position of the first unified TCI state corresponding to this codepoint#1, and unified TCI state#12 is located at the bit position of the second unified TCI state corresponding to this codepoint#1, and the first codepoint codepoint#2 activated by the TCI state activation indication information corresponds to two unified TCI states, namely unified TCI state#21 and unified TCI state#22, where unified TCI state#21 is located at the bit position of the first unified TCI state corresponding to this codepoint#2, and unified TCI state#22 is located at the bit position of the second unified TCI state corresponding to this codepoint#2, then the first indication information may indicate that for all codepoints activated by the TCI state activation indication information, the Yth unified TCI state in each codepoint can be respectively used as the unified TCI state corresponding to the codepoint of the first serving cell. For example, if the Y value of codepoint#0 is 1, and the Y values of codepoint#1 and codepoint#2 are 2, then codepoint#0 in the first serving cell corresponds to the first unified TCI state of that codepoint, that is, codepoint#0 corresponds to unified TCI state#01, and codepoint#1 and codepoint#2 in the first serving cell correspond to the second unified TCI state of that codepoint, that is, codepoint#1 corresponds to unified TCI state#12, codepoint#2 corresponds to unified TCI stat #22. For another example, if the Y value of codepoint#1 is 2, and the Y values of codepoint#0 and codepoint#2 are 1, then codepoint#1 in the first serving cell corresponds to the second unified TCI state of that codepoint, that is, codepoint#1 corresponds to unified TCI state#12, and codepoint#0 and codepoint#2 in the first serving cell correspond to the first unified TCI state of that codepoint, that is, codepoint#0 corresponds to unified TCI state#01, codepoint#2 corresponds to unified TCI stat #21.

In an embodiment of the present disclosure, at least one serving cell corresponding to the same CC list may include at least one first serving cell and at least one second serving cell. Furthermore, the second serving cell may be a second serving cell indicated based on multi downlink control information (M-DCI M-TRP). At this point, the TCI state activation indication information received by the terminal can be used to activate unified TCI states corresponding to one or more CORESETPoolIndex respectively. In this case, the activation indication information of the TCI state can also be based on the activation indication information of the TCI state of the M-DCI M-TRP serving cell. That is, the TCI state of the M-DCI M-TRP serving cell can be directly activated based on the received TCI state activation indication information. One CORESETPoolIndex can correspond to activating unified TCI states corresponding to one or more codepoints, and each codepoint corresponds to one unified TCI state. For example, it can be understood that one CORESETPoolIndex corresponds to one TRP. However, at this point, it is necessary to further agree on the activated TCI state corresponding to which CORESETPoolIndex to be used by the first serving cell S-TRP. It should be noted that different CORESETPoolIndices can be activated through the same TCI state activation indication information, or through different TCI state activation indication information. Furthermore, the TCI state activation indication information may include one or more CORESETPoolIndex.

Fig. 6 is a schematic flowchart of a method for determining a unified TCI state of a first serving cell illustrated according to an exemplary embodiment. As shown in Fig. 6, the method includes the following steps.

In step S61, a unified TCI state of a first serving cell is determined according to a second default rule; or a unified TCI state of a first serving cell is determined through second indication information.

In an embodiment of the present disclosure, when at least one first serving cell and at least one second serving cell are included in the same CC list, and the second serving cell is an M-DCI M-TRP serving cell, and the TCI state activation indication information received by the terminal activates the unified TCI state corresponding to one or more codepoints of each CORESETPoolIndex, and for each CORESETPoolIndex, each codepoint in the one or more codepoints corresponds to one activated unified TCI state, the unified TCI state of the first serving cell can be determined according to the second default rule or through the second indication information.

Fig. 7 is a schematic flowchart of a method for determining a unified TCI state of a first serving cell according to a second default rule illustrated according to an exemplary embodiment. As shown in Fig. 7, the method includes the following steps.

In step S71, the unified TCI state corresponding to the Qth CORESETPoolIndex among multiple CORESETPoolIndex is determined as the unified TCI state of the first serving cell.

### Q is a positive integer.

In an example, if the TCI state activation indication information activates two unified TCI states corresponding to two CORESETPoolIndex, for example, activating the unified TCI state corresponding to CORESETPoolIndex#0 through the first TCI state activation indication information, and activating the unified TCI state corresponding to CORESETPoolIndex#1 through the second TCI state activation indication information, the second default rule can be to use the unified TCI state corresponding to CORESETPoolIndex#0 as the unified TCI state corresponding to the first serving cell, or use the unified TCI state corresponding to CORESETPoolIndex#1 as the unified TCI state corresponding to the first serving cell.

Fig. 8 is a schematic flowchart of a method for determining a unified TCI state of a first serving cell through second indication information illustrated according to an exemplary embodiment. As shown in Fig. 8, the method includes the following steps.

In step S81, it is indicated through the second indication information that the unified TCI state corresponding to the Pth CORESETPoolIndex among multiple CORESETPoolIndex is the unified TCI state of the first serving cell.

### P is a positive integer.

In an example, it is possible to indicate through the second indication information that the CORESETPoolIndex#0 or CORESETPoolIndex#1 activated by the second indication information is the unified TCI state of the first serving cell, where P is a positive integer.

By using the technical solution of embodiments of the present disclosure, at least one first serving cell and at least one second serving cell can be included in at least one serving cell corresponding to the same CC list. When at least one second serving cell is an S-DCI M-TRP serving cell, the TCI state activation indication information activates unified TCI states corresponding to one or more codepoints, and at least one codepoint in the one or more codepoints corresponds to multiple activated unified TCI states, or when at least one second serving cell is an M-DCI M-TRP serving cell and the TCI state activation indication information activates unified TCI states corresponding to one or more CORESETPoolIndex, the determination method of the unified TCI state of the first serving cell is determined. This reduces signaling overhead and enables the terminal to reach consensus on the recognition of unified TCI state identification, thereby improving the transmission capability based on unified TCI state.

In an embodiment of the present disclosure, the first indication information and/or the second indication information may be carried in the radio resource control signaling (RRC) and/or the media access control control element signaling (MAC CE). Furthermore, the TCI state activation indication information and the first indication information can be carried in the same MAC CE or different MAC CEs, and/or the TCI state activation indication information and the second indication information can be carried in the same MAC CE or different MAC CEs.

In an embodiment of the present disclosure, a unified TCI state includes a joint TCI state, or a unified TCI state includes at least one of an uplink TCI state or a downlink TCI state.

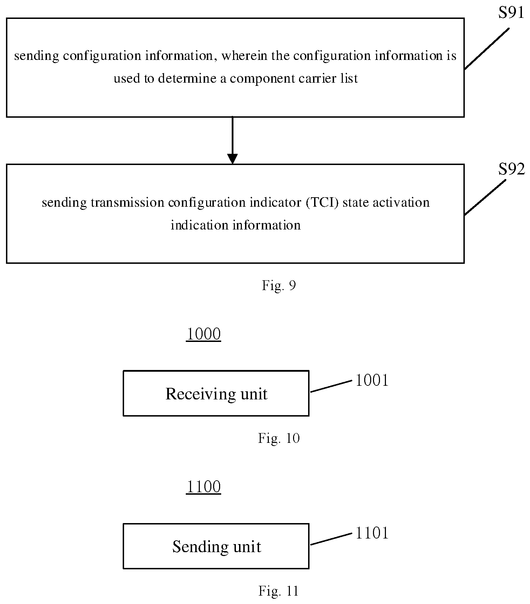

Fig. 9 is a schematic flowchart of a method for determining a TCI state illustrated according to an exemplary embodiment. As shown in Fig. 9, the method is applied in a network device, and includes the following steps.

In step S91, configuration information is sent, wherein the configuration information is used to determine a CC list.

The CC list is corresponding to at least one serving cell, and the at least one serving cell includes a first serving cell based on S-TRP transmission and a second serving cell based on M-TRP transmission.

In step S92, TCI state activation indication information is sent.

The TCI state activation indication information is used to activate a TCI state of the first serving cell and/or the second serving cell.

In an embodiment of the present disclosure, the TCI state activation indication information may be one activation indication information used to simultaneously activate one or more serving cells in the CC list, or multiple different activation indication information used to activate different serving cells in the CC list.

In an implementation, the TCI state activation indication information may be carried in a MAC CE signaling.

In an embodiment of the present disclosure, multiple serving cells in at least one serving cell corresponding to the same CC list are the first serving cells; or multiple serving cells in at least one serving cell corresponding to the same CC list are the second serving cells.

In an embodiment of the present disclosure, the second serving cell includes the second serving cell indicated based on S-DCI (S-DCI M-TRP), and/or the second serving cell indicated based on M-DCI (M-DCI M-TRP).

The S-DCI M-TRP may be determined in the following way.

When PDCCH, PDSCH, PUCCH, PUSCH and their corresponding DMRSs are configured for transmission based on multiple TCI states, the corresponding serving cell can be determined to be based on S-DCI M-TRP.

When at least one of the following conditions A, B, and C is met, it can be determined that the PDCCH/PDSCH/PUCCH/PUSCH and their respective DMRSs are configured for transmission based on multiple TCI states:
A: Single Frequency Network (SFN) transmission method, which based on the same time-domain resources, frequency-domain resources, and DMRS resources, uses multiple TCI states for transmission,
B: Repeated transmission, including Frequency Division Multiplexing (FDM) methods, where the same time-domain resources, different frequency-domain resources, and different TCI states are used for transmission. Alternatively, it may include Time Division Multiplexing (TDM) methods, where the same frequency-domain resources, different time-domain resources, and different TCI states are used for transmission.
C: Transmission based on multiple DMRS port groups, using the same time-domain and frequency-domain resources, different DMRS port groups, and different TCI states for transmission.

The M-DCI M-TRP can be determined in the following way.

When CORESETPoolIndex of at least one CORESET is configured as 1 and CORESETPoolIndex of at least another CORESET is configured as 0 or not configured to any value in multiple CORSETs of the terminal, it can be determined that the serving cell corresponding to the terminal is the second serving cell M-DCI M-TRP indicated based on multi downlink control information.

It can be understood that when the serving cell does not meet the criteria for S-DCI M-TRP and M-DCI M-TRP, it is the first serving cell based on S-TRP transmission.

In an embodiment of the present disclosure, at least one serving cell corresponding to the same CC list includes at least one first serving cell and at least one second serving cell.

In an embodiment of the present disclosure, the second serving cell is the second serving cell indicated based on single downlink control information.

In an embodiment of the present disclosure, at least one serving cell corresponding to the same CC list may include at least one first serving cell and at least one second serving cell. Furthermore, the second serving cell may be the second serving cell of S-DCI M-TRP. In this case, the TCI state activation indication information received by the terminal can be used to activate the unified TCI states corresponding to one or more codepoints, and at least one codepoint in the one or more codepoints corresponds to multiple activated unified TCI states. In this case, the activation indication information of the TCI state can be based on the TCI state activation indication information of the S-DCI M-TRP serving cell, that is, the TCI state of the S-DCI M-TRP serving cell can be directly activated based on the received TCI state activation indication information, where one codepoint can correspond to multiple unified TCI states. It can be understood that each unified TCI state corresponds to one TRP. However, at this point, further agreement is needed on which activated unified TCI state the first serving cell S-TRP should use from that codepoint.

In an embodiment of the present disclosure, the TCI state activation indication information activates unified TCI states corresponding to one or more codepoints, and at least one codepoint in the one or more codepoints corresponds to multiple activated unified TCI states; the unified TCI state of the first serving cell is determined based on the following method: determining the unified TCI state of the first serving cell according to the first default rule; or determining the unified TCI state of the first serving cell through the first indication information.

In an embodiment of the present disclosure, determining the unified TCI state of the first serving cell according to the first default rule includes: determining a specified unified TCI state corresponding to a first codepoint corresponding to the multiple unified TCI states as the unified TCI state corresponding to the first codepoint of the first serving cell; and/or determining the unified TCI state of a second codepoint corresponding to one unified TCI state as the unified TCI state corresponding to the second codepoint of the first serving cell.

In an example, if the first codepoint codepoint#0 activated by the TCI state activation indication information corresponds to two unified TCI states, namely unified TCI state#1 and unified TCI state#2, where unified TCI state#1 is located at the bit position of the first unified TCI state corresponding to codepoint#0, and unified TCI state#2 is located at the bit position of the second unified TCI state corresponding to codepoint#0. Then, the first default rule may be to use the first unified TCI state corresponding to codepoint#0, i.e. unified TCI state#1, or use the second unified TCI state corresponding to codepoint#0, i.e. unified TCI state#2, as the unified TCI state corresponding to the first codepoint of the first serving cell.

In another example, if the second codepoint codepoint#1 activated by the TCI state activation indication information corresponds to one unified TCI state unified TCI state#3, then this unified TCI state#3 is directly used as the unified TCI state corresponding to the second codepoint of the first serving cell.

In an embodiment of the present disclosure, determining the unified TCI state of the first serving cell through the first indication information includes: indicating through the first indication information to use a Xth unified TCI state corresponding to a codepoint activated by the TCI state activation indication information as the unified TCI state of the first serving cell, where X is positive integer; or indicating through the first indication information to respectively use a Yth unified TCI state corresponding to each codepoint activated by the TCI status activation indication information as the unified TCI states of the first serving cell, where Y is positive integer, and for different codepoints, the value of Y may be the same or different.

In an example, it may be indicated by the first indication information that for all codepoints activated by TCI state activation indication information, the Xth unified TCI state of the codepoint can be used as the unified TCI state corresponding to that codepoint of the first serving cell. If the first codepoint codepoint#0 activated by the TCI state activation indication information corresponds to two unified TCI states, namely unified TCI state#01 and unified TCI state#02, where unified TCI state#01 is located at the bit position of the first unified TCI state corresponding to this codepoint#0, and unified TCI state#02 is located at the bit position of the second unified TCI state corresponding to this codepoint#0, the first codepoint codepoint#1 activated by the TCI state activation indication information corresponds to two unified TCI states, namely unified TCI state#11 and unified TCI state#12, where unified TCI state#11 is located at the bit position of the first unified TCI state corresponding to this codepoint#1, and unified TCI state#12 is located at the bit position of the second unified TCI state corresponding to this codepoint#1, and the first codepoint codepoint#2 activated by the TCI state activation indication information corresponds to two unified TCI states, namely unified TCI state#21 and unified TCI state#22, where unified TCI state#21 is located at the bit position of the first unified TCI state corresponding to this codepoint#2, and unified TCI state#22 is located at the bit position of the second unified TCI state corresponding to this codepoint#2, then the first indication information may indicate that for all codepoints activated by the TCI state activation indication information, the Xth unified TCI state of the codepoint is used as the unified TCI state corresponding to that codepoint of the first serving cell. For example, X=1, then the codepoint#0, codepoint#1, codepoint#2... of the first serving cell correspond to the first unified TCI state of that codepoint, that is, codepoint#0 corresponds to unified TCI state#01, codepoint#1 corresponds to unified TCI state#11, codepoint#2 corresponds to unified TCI state#21. For example, X=2, then the codepoint# 0, codepoint#1, codepoint#2... of the first serving cell correspond to the second unified TCI state of that codepoint, that is, codepoint#0 corresponds to unified TCI state#02, codepoint#1 corresponds to unified TCI state#12, codepoint#2 corresponds to unified TCI state#22.

In another example, each codepoint activated by the TCI state activation indication information can be indicated by the first indication information to use the Yth unified TCI state in each codepoint as the unified TCI state corresponding to the codepoint of the first serving cell, where X and Y are positive integers, and the value of Y can be the same or different for different codepoints. If the first codepoint codepoint#0 activated by the TCI state activation indication information corresponds to two unified TCI states, namely unified TCI state#01 and unified TCI state#02, where unified TCI state#01 is located at the bit position of the first unified TCI state corresponding to this codepoint#0, and unified TCI state#02 is located at the bit position of the second unified TCI state corresponding to this codepoint#0, the first codepoint codepoint#1 activated by the TCI state activation indication information corresponds to two unified TCI states, namely unified TCI state#11 and unified TCI state#12, where unified TCI state#11 is located at the bit position of the first unified TCI state corresponding to this codepoint#1, and unified TCI state#12 is located at the bit position of the second unified TCI state corresponding to this codepoint#1, and the first codepoint codepoint#2 activated by the TCI state activation indication information corresponds to two unified TCI states, namely unified TCI state#21 and unified TCI state#22, where unified TCI state#21 is located at the bit position of the first unified TCI state corresponding to this codepoint#2, and unified TCI state#22 is located at the bit position of the second unified TCI state corresponding to this codepoint#2, then the first indication information may indicate that for all codepoints activated by the TCI state activation indication information, the Yth unified TCI state in each codepoint can be respectively used as the unified TCI state corresponding to the codepoint of the first serving cell. For example, if the Y value of codepoint#0 is 1, and the Y values of codepoint#1 and codepoint#2 are 2, then codepoint#0 in the first serving cell corresponds to the first unified TCI state of that codepoint, that is, codepoint#0 corresponds to unified TCI state#01, and codepoint#1 and codepoint#2 in the first serving cell correspond to the second unified TCI state of that codepoint, that is, codepoint#1 corresponds to unified TCI state#12, codepoint#2 corresponds to unified TCI stat #22. For another example, if the Y value of codepoint#1 is 2, and the Y values of codepoint#0 and codepoint#2 are 1, then codepoint#1 in the first serving cell corresponds to the second unified TCI state of that codepoint, that is, codepoint#1 corresponds to unified TCI state#12, and codepoint#0 and codepoint#2 in the first serving cell correspond to the first unified TCI state of that codepoint, that is, codepoint#0 corresponds to unified TCI state#01, codepoint#2 corresponds to unified TCI stat #21.

In an embodiment of the present disclosure, the second serving cell may be a second serving cell indicated based on multi downlink control information (M-DCI M-TRP). At this point, the TCI state activation indication information received by the terminal can be used to activate unified TCI states corresponding to one or more CORESETPoolIndex respectively. In this case, the activation indication information of the TCI state can also be based on the activation indication information of the TCI state of the M-DCI M-TRP serving cell. That is, the TCI state of the M-DCI M-TRP serving cell can be directly activated based on the received TCI state activation indication information. One CORESETPoolIndex can correspond to activating unified TCI states corresponding to one or more codepoints, and each codepoint corresponds to one unified TCI state. For example, it can be understood that one CORESETPoolIndex corresponds to one TRP. However, at this point, it is necessary to further agree on the activated TCI state corresponding to which CORESETPoolIndex to be used by the first serving cell S-TRP. It should be noted that different CORESETPoolIndices can be activated through the same TCI state activation indication information, or through different TCI state activation indication information. Furthermore, the TCI state activation indication information may include one or more CORESETPoolIndex.

In an embodiment of the present disclosure, the TCI state activation indication information activates unified TCI states corresponding to one or more CORESETPoolIndex; the unified TCI state of the first serving cell is determined based on the following method: determining the unified TCI state of the first serving cell according to the second default rule; or determining the unified TCI state of the first serving cell through the second indication information.

In an embodiment of the present disclosure, determining the unified TCI state of the first serving cell according to the second default rule includes: determining the unified TCI state corresponding to the Qth CORESETPoolIndex among multiple CORESETPoolIndex as the unified TCI state of the first serving cell, where Q is a positive integer.

In an example, if the TCI state activation indication information activates two unified TCI states corresponding to two CORESETPoolIndex, for example, activating the unified TCI state corresponding to CORESETPoolIndex#0 through the first TCI state activation indication information, and activating the unified TCI state corresponding to CORESETPoolIndex#1 through the second TCI state activation indication information, the second default rule can be to use the unified TCI state corresponding to CORESETPoolIndex#0 as the unified TCI state corresponding to the first serving cell, or use the unified TCI state corresponding to CORESETPoolIndex#1 as the unified TCI state corresponding to the first serving cell.

In an embodiment of the present disclosure, determining the unified TCI state of the first serving cell through the second indication information includes: indicating through the second indication information that the unified TCI state corresponding to the Pth CORESETPoolIndex among multiple CORESETPoolIndex is the unified TCI state of the first serving cell, where P is a positive integer.

In an example, it is possible to indicate through the second indication information that the CORESETPoolIndex#0 or CORESETPoolIndex#1 activated by the second indication information is the unified TCI state of the first serving cell, where P is a positive integer.

In an embodiment of the present disclosure, the first indication information and/or the second indication information are carried in the RRC signaling and/or the MAC CE signaling.

In an embodiment of the present disclosure, the TCI state activation indication information and the first indication information are carried in the same MAC CE signaling, and/or the TCI state activation indication information and the second indication information are carried in the same MAC CE signaling.

In an embodiment of the present disclosure, a unified TCI state includes a joint TCI state, or a unified TCI state includes at least one of an uplink TCI state or a downlink TCI state.

By adopting the technical solution of embodiments of the present disclosure, the method for activating TCI states of serving cells based on S-TRP transmission and serving cells based on M-TRP transmission configured in a CC list is determined. This reduces signaling overhead and enables terminals to reach consensus on the identification of unified TCI states, thereby improving the transmission capability based on unified TCI states.

It can be understood that the technical implementations involved in the process of determining the TCI state performed by the network device in embodiments of the present disclosure can be applied to the process of determining the TCI state performed by the terminal in embodiments of the present disclosure. Therefore, for some technical implementation descriptions that are not detailed enough in the process of determining the TCI state performed by the network device, please refer to the relevant descriptions in the implementation process of determining the TCI state performed by the terminal, which will not be repeated here.

It can be understood that the method for determining the TCI state provided in embodiments of the present disclosure is applicable to the process of determining the TCI state during the interaction between the terminal and the network device. The process of determining the TCI state through interaction between the terminal and the network device will not be described in detail in embodiments of the present disclosure.

It should be noted that those skilled in the art can understand that the various embodiments/implementations mentioned above in this disclosure can be used in conjunction with the aforementioned embodiments or independently. No matter whether used alone or in conjunction with the aforementioned embodiments, the implementation principle is similar. In embodiments of the present disclosure, some embodiments are described as being used together. Of course, those skilled in the art can understand that such examples do not limit the embodiments of the present disclosure.

Based on the same concept, embodiments of the present disclosure also provide an apparatus for determining a TCI state.

It can be understood that the apparatus for determining the TCI state provided in embodiments of the present disclosure includes hardware structures and/or software modules corresponding to the execution of various functions in order to achieve the above functions. Based on the units and algorithm steps of the examples disclosed in this disclosure, this disclosure can be implemented in the form of hardware or a combination of hardware and computer software. Whether a certain function is executed through hardware or computer software driven hardware depends on the specific application and design constraints of the technical solution. Technicians in this field can use different methods to achieve the described functions for each specific application, but such implementation should not be considered beyond the scope of the technical solutions disclosed in embodiments of the present disclosure.

Fig. 10 is a block diagram of an apparatus for determining a TCI state illustrated according to an exemplary embodiment. As shown in Fig. 10, the apparatus 1000 includes a receiving unit 1001.

The receiving unit 1001 is configured to receive configuration information, wherein the configuration information is used to determine a CC list, and the CC list corresponds to at least one serving cell.

The at least one serving cell includes a first serving cell based on single transmission and reception point transmission, and/or a second serving cell based on multi transmission and reception point transmission.

The receiving unit is further configured to receive TCI state activation indication information, wherein the TCI state activation indication information is used to activate a TCI state of the first serving cell and/or the second serving cell.

In an embodiment of the present disclosure, multiple serving cells in the at least one serving cell corresponding to the same CC list are the first serving cells; or multiple serving cells in the at least one serving cell corresponding to the same CC list are the second serving cells.

In an embodiment of the present disclosure, the second serving cells include a second serving cell indicated based on single downlink control information and/or a second serving cell indicated based on multi downlink control information.

In an embodiment of the present disclosure, the at least one serving cell corresponding to the same component carrier list includes at least one first serving cell and at least one second serving cell.

In an embodiment of the present disclosure, the second serving cell is a second serving cell indicated based on single downlink control information.

In an embodiment of the present disclosure, the TCI state activation indication information activates unified TCI states corresponding to one or more codepoints, and at least one codepoint in the one or more codepoints corresponds to multiple activated unified TCI states; the unified TCI state of the first serving cell is determined based on the following manner: determining the unified TCI state of the first serving cell according to a first default rule; or determining the unified TCI state of the first serving cell through first indication information.

In an embodiment of the present disclosure, determining the unified TCI state of the first serving cell according to the first default rule includes: determining a specified unified TCI sate corresponding to a first codepoint corresponding to the multiple activated unified TCI states, as the unified TCI state corresponding to the first codepoint of the first serving cell; and/or determining the unified TCI state of a second codepoint corresponding to one unified TCI states, as the unified TCI state corresponding to the second codepoint of the first serving cell.

In an embodiment of the present disclosure, determining the unified TCI state of the first serving cell through the first indication information includes: indicating through the first indication information, a Xth unified TCI state corresponding to a codepoint activated by the TCI state activation indication information, as the unified TCI state of the first serving cell, where X is a positive integer; or indicating through the first indication information, a Yth unified TCI state corresponding to each codepoint activated by the TCI state activation indication information as the unified TCI state of the first serving cell, where Y is a positive integer.

In an embodiment of the present disclosure, the second serving cell is a second serving cell indicated based on multi downlink control information.

In an embodiment of the present disclosure, the TCI state activation indication information activates unified TCI states respectively corresponding to one or more CORESETPoolIndex; the unified TCI state of the first serving cell is determined based on the following manner: determining the unified TCI state of the first serving cell according to a second default rule; or determining the unified TCI state of the first serving cell through second indication information.

In an embodiment of the present disclosure, determining the unified TCI state of the first serving cell according to the second default rule includes: determining a unified TCI sate corresponding to a Qth CORESETPoolIndex in multiple CORESETPoolIndex as the unified TCI state of the first serving cell, where Q is a positive integer.

In an embodiment of the present disclosure, determining the unified TCI state of the first serving cell through the second indication information includes: indicating through the second indication information, a unified TCI sate corresponding to a Pth CORESETPoolIndex in multiple CORESETPoolIndex as the unified TCI state of the first serving cell, where P is a positive integer.

In an embodiment of the present disclosure, the first indication information and/or the second indication information are carried in a radio resource control signaling and/or a media access control control element signaling.

In an embodiment of the present disclosure, the TCI state activation indication information and the first indication information are carried in the same media access control control element signaling, and/or the TCI state activation indication information and the second indication information are carried in the same media access control control element signaling.

In an embodiment of the present disclosure, the unified TCI state comprises at least one of a joint TCI state, an uplink TCI state, or a downlink TCI state.

By adopting the technical solution of embodiments of the present disclosure, the method for activating TCI states of serving cells based on S-TRP transmission and serving cells based on M-TRP transmission configured in a CC list is determined. This reduces signaling overhead and enables terminals to reach consensus on the identification of unified TCI states, thereby improving the transmission capability based on unified TCI states.

Fig. 11 is a block diagram of an apparatus for determining a TCI state illustrated according to an exemplary embodiment. As shown in Fig. 11, the apparatus 1100 includes a sending unit 1101.

The sending unit 1101 is configured to send configuration information, wherein the configuration information is used to determine a CC list, and the CC list corresponds to at least one serving cell.

The at least one serving cell includes a first serving cell based on single transmission and reception point transmission, and/or a second serving cell based on multi transmission and reception point transmission.

The sending unit is further configured to receive TCI state activation indication information, wherein the TCI state activation indication information is used to activate a TCI state of the first serving cell and/or the second serving cell.

In an embodiment of the present disclosure, multiple serving cells in the at least one serving cell corresponding to the same CC list are the first serving cells; or multiple serving cells in the at least one serving cell corresponding to the same CC list are the second serving cells.

In an embodiment of the present disclosure, the second serving cells include a second serving cell indicated based on single downlink control information and/or a second serving cell indicated based on multi downlink control information.

In an embodiment of the present disclosure, the at least one serving cell corresponding to the same component carrier list includes at least one first serving cell and at least one second serving cell.

In an embodiment of the present disclosure, the second serving cell is a second serving cell indicated based on single downlink control information.

In an embodiment of the present disclosure, the TCI state activation indication information activates unified TCI states corresponding to one or more codepoints, and at least one codepoint in the one or more codepoints corresponds to multiple activated unified TCI states; the unified TCI state of the first serving cell is determined based on the following manner: determining the unified TCI state of the first serving cell according to a first default rule; or determining the unified TCI state of the first serving cell through first indication information.

In an embodiment of the present disclosure, determining the unified TCI state of the first serving cell according to the first default rule includes: determining a specified unified TCI sate corresponding to a first codepoint corresponding to the multiple activated unified TCI states, as the unified TCI state corresponding to the first codepoint of the first serving cell; and/or determining the unified TCI state of a second codepoint corresponding to one unified TCI states, as the unified TCI state corresponding to the second codepoint of the first serving cell.

In an embodiment of the present disclosure, determining the unified TCI state of the first serving cell through the first indication information includes: indicating through the first indication information, a Xth unified TCI state corresponding to a codepoint activated by the TCI state activation indication information, as the unified TCI state of the first serving cell, where X is a positive integer; or indicating through the first indication information, a Yth unified TCI state corresponding to each codepoint activated by the TCI state activation indication information as the unified TCI state of the first serving cell, where Y is a positive integer.

In an embodiment of the present disclosure, the second serving cell is a second serving cell indicated based on multi downlink control information.

In an embodiment of the present disclosure, the TCI state activation indication information activates unified TCI states respectively corresponding to one or more CORESETPoolIndex; the unified TCI state of the first serving cell is determined based on the following manner: determining the unified TCI state of the first serving cell according to a second default rule; or determining the unified TCI state of the first serving cell through second indication information.

In an embodiment of the present disclosure, determining the unified TCI state of the first serving cell according to the second default rule includes: determining a unified TCI sate corresponding to a Qth CORESETPoolIndex in multiple CORESETPoolIndex as the unified TCI state of the first serving cell, where Q is a positive integer.

In an embodiment of the present disclosure, determining the unified TCI state of the first serving cell through the second indication information includes: indicating through the second indication information, a unified TCI sate corresponding to a Pth CORESETPoolIndex in multiple CORESETPoolIndex as the unified TCI state of the first serving cell, where P is a positive integer.

In an embodiment of the present disclosure, the first indication information and/or the second indication information are carried in a radio resource control signaling and/or a media access control control element signaling.

In an embodiment of the present disclosure, the TCI state activation indication information and the first indication information are carried in the same media access control control element signaling, and/or the TCI state activation indication information and the second indication information are carried in the same media access control control element signaling.

In an embodiment of the present disclosure, the unified TCI state comprises at least one of a joint TCI state, an uplink TCI state, or a downlink TCI state.

By adopting the technical solution of embodiments of the present disclosure, the method for activating TCI states of serving cells based on S-TRP transmission and serving cells based on M-TRP transmission configured in a CC list is determined. This reduces signaling overhead and enables terminals to reach consensus on the identification of unified TCI states, thereby improving the transmission capability based on unified TCI states.

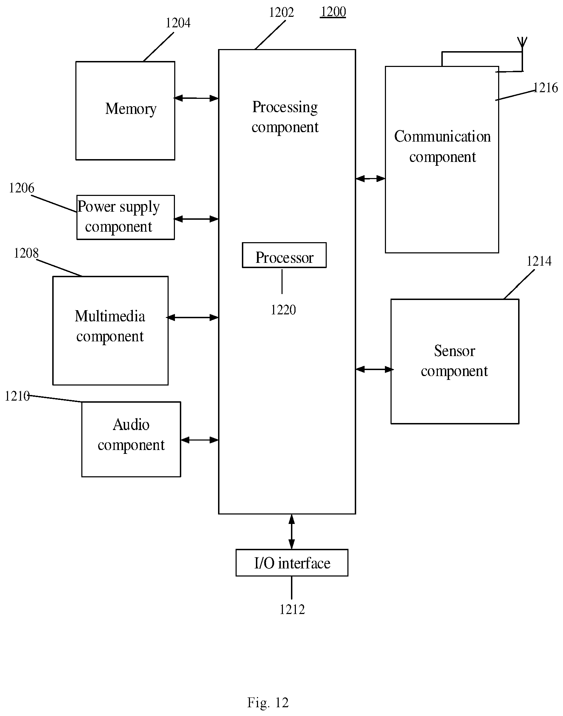

Fig. 12 is a block diagram of an apparatus 1200 for determining a TCI state illustrated according to an exemplary embodiment. For example, the apparatus 1200 may be a mobile phone, a computer, a digital broadcast terminal device, a message transceiver device, a game console, a tablet device, a medical device, a fitness device, a personal digital assistant, or the like.

Referring to FIG. 12, the apparatus 1200 may include one or more of the following components: a processing component 1202, a memory 1204, a power supply component 1206, a multimedia component 1208, an audio component 1210, an input/output (I/O) interface 1212, a sensor component 1214, and a communication component 1216.

The processing component 1202 typically controls overall operations of the apparatus 1200, such as the operations associated with display, telephone calls, data communications, camera operations, and recording operations. The processing component 1202 may include one or more processors 1220 to execute instructions to complete all or part of the steps in the above methods. Moreover, the processing component 1202 may include at least one module which facilitates the interaction between the processing component 1202 and other components. For instance, the processing component 1202 may include a multimedia module to facilitate the interaction between the multimedia component 1208 and the processing component 1202.

The memory 1204 is configured to store various types of data to support operations in the apparatus 1200. Examples of such data include instructions for any applications or methods operated on the apparatus 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 1206 provides power to various components of the apparatus 1200. The power supply component 1206 may include a power management system, one or more power sources, and any other components associated with the generation, management, and distribution of power in the apparatus 1200.

The multimedia component 1208 includes a screen providing an output interface between the apparatus 1200 and a user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, slips, and gestures on the touch panel. The touch sensors may not only sense a boundary of a touch or slip action, but also sense a wake-up time and a pressure associated with the touch or slip action. In some embodiments, the multimedia component 1208 includes a front camera and/or a rear camera. The front camera and/or the rear camera may receive an external multimedia datum while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone (MIC) that is configured to receive external audio signals when the apparatus 1200 is in operating modes such as Call Mode, Record Mode, and Speech Recognition Mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the apparatus 1200. For instance, the sensor component 1214 may detect an open/closed status of the apparatus 1200, relative positioning of components, e.g., a display and a keypad, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate wired or wireless communication between the apparatus 1200 and other devices. The apparatus 1200 may access a wireless network based on a communication standard, such as WiFi, 2G, or 3G, or a combination thereof. In an exemplary embodiment, the communication component 1216 receives a broadcast signal or broadcast associated information from an external broadcast management system via a broadcast channel. In an exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, a non-transitory computer-readable storage medium including instructions is also provided, such as a memory 1204 including instructions, which can be executed by the processor 1220 of the apparatus 1200 to accomplish the above methods. For example, the non-transitory computer-readable storage medium may be ROM, random access memory (RAM), CD-ROM, magnetic tape, floppy disk, and optical data storage devices.

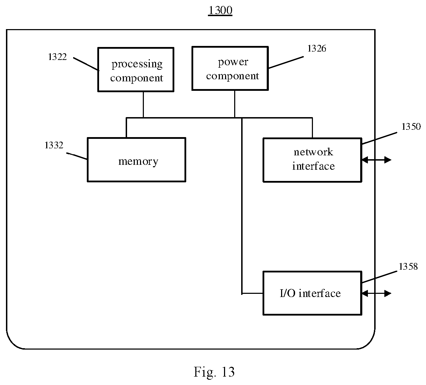

Fig. 13 is a block diagram of an apparatus 1300 for determining a TCI state illustrated according to an exemplary embodiment. For example, the apparatus 1300 may be provided as a server. Referring to Fig. 13, the apparatus 1300 includes a processing component 1322, which further includes one or more processors, as well as memory resources represented by a memory 1332, for storing instructions that can be executed by the processing component 1322, such as application programs. The application program stored in the memory 1332 may include one or more modules each corresponding to a set of instructions. In addition, the processing component 1322 is configured to execute instructions to implement the method for determine the TCI state as described above.

The apparatus 1300 may further include a power component 1326 configured to perform power management of the apparatus 1300, a wired or wireless network interface 1350 configured to connect the apparatus 1300 to a network, and an input/output (I/O) interface 1358. The apparatus 1300 can operate based on operating systems stored in the memory 1332, such as Windows ServerTM, Mac OS XTM, UnixTM, LinuxTM, FreeBSDTM, or similar.

In an exemplary embodiment, a non-transitory computer-readable storage medium including instructions is also provided, such as a memory 1332 including instructions, which can be executed by the processing component 1322 of the apparatus 1300 to accomplish the above methods. For example, the non-transitory computer-readable storage medium may be ROM, random access memory (RAM), CD-ROM, magnetic tape, floppy disk, and optical data storage devices.

It can be further understood that "multiple" in this disclosure refers to two or more, and other quantifiers are similar to it. 'And/or' describes the association relationship between related objects, indicating that there can be three types of relationships, for example, A and/or B, which can represent: A exists alone, A and B exist simultaneously, and B exists alone. The character '/' generally indicates that the associated object before and after is an 'or' relationship. The singular forms of 'one', 'said', and 'this' are also intended to include the majority form, unless the context clearly indicates otherwise.

It can be further understood that the terms "first", "second", etc. are used to describe various information, but this information should not be limited to these terms. These terms are only used to distinguish information of the same type from each other and do not indicate a specific order or level of importance. In fact, expressions such as "first" and "second" can be used interchangeably. For example, without departing from the scope of this disclosure, the first information may also be referred to as the second information, and similarly, the second information may also be referred to as the first information.

It can be further understood that the meanings of words such as "in response to" and "if" mentioned in this disclosure depend on the context and the actual usage scenario. For example, the word "in response to" used here can be interpreted as "when" or "in a case that" or "if" or "upon".

It can be further understood that although the operations are described in a specific order in the accompanying drawings in embodiments of the present disclosure, it should not be understood as requiring the execution of these operations in the specific order or serial order shown, or requiring the execution of all the operations shown to achieve the desired results. In specific environments, multitasking and parallel processing may be advantageous.

After considering the specification and practicing the invention disclosed herein, technical personnel in this field will easily come up with other implementations of the present disclosure. This application aims to cover any variations, uses, or adaptive changes of the present disclosure, which follow the general principles of the present disclosure and include common knowledge or customary technical means in the technical field not disclosed in the present disclosure.

It will be appreciated that the present disclosure is not limited to the exact construction that has been described above and illustrated in the accompanying drawings, and that various modifications and changes can be made without departing from the scope thereof. The scope of the present disclosure is only limited by the appended claims.

## Claims

1. A method for determining a transmission configuration indictor state, applied to a terminal, comprising:
receiving configuration information, wherein the configuration information is used to determine a component carrier list, and the component carrier list corresponds to at least one serving cell; the at least one serving cell comprises a first serving cell based on single transmission and reception point transmission, and/or a second serving cell based on multi transmission and reception point transmission;
receiving transmission configuration indicator (TCI) state activation indication information, wherein the TCI state activation indication information is used to activate a TCI state of the first serving cell and/or the second serving cell.

2. The method of claim 1, wherein multiple serving cells in the at least one serving cell corresponding to the same component carrier list are the first serving cells; or
multiple serving cells in the at least one serving cell corresponding to the same component carrier list are the second serving cells.

3. The method of claim 2, wherein the second serving cells comprise a second serving cell indicated based on single downlink control information and/or a second serving cell indicated based on multi downlink control information.

4. The method of claim 1, wherein the at least one serving cell corresponding to the same component carrier list comprises at least one first serving cell and at least one second serving cell.

5. The method of claim 4, wherein the second serving cell is a second serving cell indicated based on single downlink control information.

6. The method of claim 5, wherein the TCI state activation indication information activates unified TCI states corresponding to one or more codepoints, and at least one codepoint in the one or more codepoints corresponds to multiple activated unified TCI states;
the unified TCI state of the first serving cell is determined based on the following manner:
determining the unified TCI state of the first serving cell according to a first default rule; or
determining the unified TCI state of the first serving cell through first indication information.

7. The method of claim 6, wherein determining the unified TCI state of the first serving cell according to the first default rule comprises:
determining a specified unified TCI sate corresponding to a first codepoint corresponding to the multiple activated unified TCI states, as the unified TCI state corresponding to the first codepoint of the first serving cell; and/or
determining the unified TCI state of a second codepoint corresponding to one unified TCI states, as the unified TCI state corresponding to the second codepoint of the first serving cell.

8. The method of claim 6, wherein determining the unified TCI state of the first serving cell through the first indication information comprises:
indicating through the first indication information, a Xth unified TCI state corresponding to a codepoint activated by the TCI state activation indication information, as the unified TCI state of the first serving cell, where X is a positive integer; or
indicating through the first indication information, a Yth unified TCI state corresponding to each codepoint activated by the TCI state activation indication information as the unified TCI state of the first serving cell, where Y is a positive integer.

9. The method of claim 4, wherein the second serving cell is a second serving cell indicated based on multi downlink control information.

10. The method of claim 9, wherein the TCI state activation indication information activates unified TCI states respectively corresponding to one or more control resource set pool index;
the unified TCI state of the first serving cell is determined based on the following manner:
determining the unified TCI state of the first serving cell according to a second default rule; or
determining the unified TCI state of the first serving cell through second indication information.

11. The method of claim 10, wherein determining the unified TCI state of the first serving cell according to the second default rule comprises:
determining a unified TCI sate corresponding to a Qth control resource set pool index in multiple control resource set pool indexes as the unified TCI state of the first serving cell, where Q is a positive integer.

12. The method of claim 10, wherein determining the unified TCI state of the first serving cell through the second indication information comprises:
indicating through the second indication information, a unified TCI sate corresponding to a Pth control resource set pool index in multiple control resource set pool indexes as the unified TCI state of the first serving cell, where P is a positive integer.

13. The method of claim 6 or 10, wherein the first indication information and/or the second indication information are carried in a radio resource control signaling and/or a media access control control element signaling.

14. The method of claim 13, wherein the TCI state activation indication information and the first indication information are carried in the same media access control control element signaling, and/or the TCI state activation indication information and the second indication information are carried in the same media access control control element signaling.

15. The method of claim 6, wherein the unified TCI state comprises at least one of a joint TCI state, an uplink TCI state, or a downlink TCI state.

16. A method for determining a transmission configuration indictor state, applied to a network device, comprising:
sending configuration information, wherein the configuration information is used to determine a component carrier list, and the component carrier list corresponds to at least one serving cell; the at least one serving cell comprises a first serving cell based on single transmission and reception point transmission, and/or a second serving cell based on multi transmission and reception point transmission;
sending transmission configuration indicator (TCI) state activation indication information, wherein the TCI state activation indication information is used to activate a TCI state of the first serving cell and/or the second serving cell.

17. The method of claim 16, wherein multiple serving cells in the at least one serving cell corresponding to the same component carrier list are the first serving cells; or
multiple serving cells in the at least one serving cell corresponding to the same component carrier list are the second serving cells.

18. The method of claim 17, wherein the second serving cells comprise a second serving cell indicated based on single downlink control information and/or a second serving cell indicated based on multi downlink control information.

19. The method of claim 16, wherein the at least one serving cell corresponding to the same component carrier list comprises at least one first serving cell and at least one second serving cell.

20. The method of claim 19, wherein the second serving cell is a second serving cell indicated based on single downlink control information.

21. The method of claim 20, wherein the TCI state activation indication information activates unified TCI states corresponding to one or more codepoints, and at least one codepoint in the one or more codepoints corresponds to multiple activated unified TCI states;
the unified TCI state of the first serving cell is determined based on the following manner:
determining the unified TCI state of the first serving cell according to a first default rule; or
determining the unified TCI state of the first serving cell through first indication information.

22. The method of claim 21, wherein determining the unified TCI state of the first serving cell according to the first default rule comprises:
determining a specified unified TCI sate corresponding to a first codepoint corresponding to the multiple activated unified TCI states, as the unified TCI state corresponding to the first codepoint of the first serving cell; and/or
determining the unified TCI state of a second codepoint corresponding to one unified TCI states, as the unified TCI state corresponding to the second codepoint of the first serving cell.

23. The method of claim 21, wherein determining the unified TCI state of the first serving cell through the first indication information comprises:
indicating through the first indication information, a Xth unified TCI state corresponding to a codepoint activated by the TCI state activation indication information, as the unified TCI state of the first serving cell, where X is a positive integer; or
indicating through the first indication information, a Yth unified TCI state corresponding to each codepoint activated by the TCI state activation indication information as the unified TCI state of the first serving cell, where Y is a positive integer.

24. The method of claim 19, wherein the second serving cell is a second serving cell indicated based on multi downlink control information.

25. The method of claim 24, wherein the TCI state activation indication information activates unified TCI states respectively corresponding to one or more control resource set pool index;
the unified TCI state of the first serving cell is determined based on the following manner:
determining the unified TCI state of the first serving cell according to a second default rule; or
determining the unified TCI state of the first serving cell through second indication information.

26. The method of claim 25, wherein determining the unified TCI state of the first serving cell according to the second default rule comprises:
determining a unified TCI sate corresponding to a Qth control resource set pool index in multiple control resource set pool indexes as the unified TCI state of the first serving cell, where Q is a positive integer.

27. The method of claim 25, wherein determining the unified TCI state of the first serving cell through the second indication information comprises:
indicating through the second indication information, a unified TCI sate corresponding to a Pth control resource set pool index in multiple control resource set pool indexes as the unified TCI state of the first serving cell, where P is a positive integer.

28. The method of claim 21 or 25, wherein the first indication information and/or the second indication information are carried in a radio resource control signaling and/or a media access control control element signaling.

29. The method of claim 28, wherein the TCI state activation indication information and the first indication information are carried in the same media access control control element signaling, and/or the TCI state activation indication information and the second indication information are carried in the same media access control control element signaling.

30. The method of claim 21, wherein the unified TCI state comprises at least one of a joint TCI state, an uplink TCI state, or a downlink TCI state.

31. An apparatus for determining a transmission configuration indictor state, comprising:
a receiving unit, configured to receive configuration information, wherein the configuration information is used to determine a component carrier list, and the component carrier list corresponds to at least one serving cell; the at least one serving cell comprises a first serving cell based on single transmission and reception point transmission, and/or a second serving cell based on multi transmission and reception point transmission;
the receiving unit is further configured to receive transmission configuration indicator (TCI) state activation indication information, wherein the TCI state activation indication information is used to activate a TCI state of the first serving cell and/or the second serving cell.

32. An apparatus for determining a transmission configuration indictor state, comprising:
a sending unit, configured to send configuration information, wherein the configuration information is used to determine a component carrier list, and the component carrier list corresponds to at least one serving cell; the at least one serving cell comprises a first serving cell based on single transmission and reception point transmission, and/or a second serving cell based on multi transmission and reception point transmission;
the sending unit is further configured to send transmission configuration indicator (TCI) state activation indication information, wherein the TCI state activation indication information is used to activate a TCI state of the first serving cell and/or the second serving cell.

33. An apparatus for determining a transmission configuration indicator state, comprising:
a processor; and
a memory, configured to store instructions executable by the processor,
wherein the processor is configured to execute the method of any of claims 1-15.

34. An apparatus for determining a transmission configuration indicator state, comprising:
a processor; and
a memory, configured to store instructions executable by the processor,
wherein the processor is configured to execute the method of any of claims 16-30.

35. A storage medium, stored with instructions which, when executed by a processor of a terminal, enable the terminal to implement the method of any of claims 1-15.

36. A storage medium, stored with instructions which, when executed by a processor of a network device, enable the network device to implement the method of any of claims 16-30.
